**Europäisches Patentamt**

**European Patent Office**

**Office européen des brevets**

(19)

(11) Veröffentlichungsnummer: **0 026 920**
**A2**

(12)

# EUROPÄISCHE PATENTANMELDUNG

(21) Anmeldenummer: 80105956.9

(22) Anmeldetag: 02.10.80

(51) Int. Cl.³: **C 08 J 9/22,** H 01 B 1/24,
C 08 L 75/04, C 08 J 3/20,
C 08 K 3/04, C 09 J 3/00,
C 09 J 3/16

(30) Priorität: 04.10.79 DE 2940260

(43) Veröffentlichungstag der Anmeldung. 15.04.81
Patentblatt 81/15

(84) Benannte Vertragsstaaten: AT BE CH FR GB IT LI NL SE

(71) Anmelder: **METZELER SCHAUM GMBH,**
**Donaustrasse 51, D-8940 Memmingen (DE)**

(72) Erfinder: **Berger, Fritz, Piechlerstrasse 10,**
**D-8942 Ottobeuren (DE)**
Erfinder: **Dombkowski, Otto, Hauptstrasse 45 1/2,**
**D-8941 Westerheim (DE)**
Erfinder: **Riemhofer, Franz, Dr., Grenzhofstrasse 9 1/2,**
**D-8940 Memmingen (DE)**

(74) Vertreter: **Michelis, Theodor, Dipl.-Ing.,**
**Westendstrasse 131, D-8000 München 2 (DE)**

(54) **Verfahren zur Herstellung elektrisch leitfähigen Polyurethan-Weichschaum-Kunststoffs und elektrisch leitfähige Kunststoffmasse.**

(57) Zur Herstellung von elektrisch leitendem Polyurethan (PUR)-Weichschaum werden PUR-Schaumpartikel mit einem Bindemittel benetzt und leitender Russ in Pulverform zugefügt; diese Masse wird durchgemischt und dann zu Blöcken oder Formteilen verpresst.

EP 0 026 920 A2

MS 149 P 79
0026920

Verfahren zur Herstellung von elektrisch leitfähigem
Polyurethan-Weichschaum-Kunststoff

Die Erfindung bezieht sich auf ein Verfahren zur Herstellung von elektrisch leitfähigem Polyurethan-Weichschaum-Kunststoff.

Zum Befördern oder Versenden von durch Aufladungen gefährdeten Bauelementen, wie MOS-Bausteine, CMOS-Bausteine, bestückte Leiterplatten, IC's, Kondensatoren usw. ist es notwendig, diese Elemente in geeignete, elektrisch leitfähige Materialien zu verpacken, um eine statische Aufladung der Elemente selbst bzw. des Verpackungsmaterials und damit eine Zerstörung der Bauelemente zu verhindern.

Ferner werden leitfähige Kunststoffe für Geräte der Datenverarbeitung sowie der Elektro- und Radartechnik zur Auskleidung und Abschirmung benötigt.

Elektrisch leitfähiger Weichschaum-Kunststoff in Form von Platten oder auch als Formteile wurden gemäß dem Stand der Technik dadurch hergestellt, daß PUR-Blockschaum-Platten- oder -Zuschnitte verwendet wurden, die in einem Tränkprozeß mit einem elektrisch leitenden Stoff versehen wurden. Gemäß einem anderen Verfahren erhielten die PUR-Zuschnitte durch Aufsprühen von elektrisch leitfähigen Stoffen eine gewisse Leitfähigkeit. Verwendet wurden hierfür wässerige Rußdispersionen oder Graphitsprays. Diese bekannten Verfahren zur Herstellung von leitfähigen PUR-Schaumstoffen sind sehr kostenintensiv, ca. 10:1 gegenüber ungetränktem PUR-Schaum. Es ist nur anwendbar für Bahnenware bis zu einer Dicke von etwa 10 mm, wobei um Zuschnitte mit einem Widerstand von $10^3$ Ohm zu erhalten, bedingt durch die hohe Trockenauflage,

0026920

diese Zuschnitte sehr hart und brettig werden.

Es ist desweiteren bekannt, zum Transport von elektronischen Bauteilen Folien und Folienbeutel zu verwenden, die durch Einarbeitung von elektrisch leitfähigen Stoffen, wie Metallfasern, Metallpulver, Rußpulver oder Graphitpulver, eine ausreichende Oberflächenleitfähigkeit besitzen. Diese bekannte, elektrisch leitfähige Polyäthylen-Folie schützt zwar vor elektrostatischer Aufladung, bietet jedoch keinen Schutz vor Stoßbeanspruchung, d.h. es muß zusätzlich eine stoßabsorbierende Weichverpackung verwendet werden, was einen relativ umständlichen Verpackungsvorgang bedingt.

Durch die DE-OS 26 45 792 sind elektrisch leitfähige Kunststoffmassen vorgeschlagen worden, bei welchen wässerige Kunststoffdispersionen mit wässerigen Rußdispersionen zu einem dünnflüssigen und spritzfähigen Gemisch zusammengerührt werden, welches z.B. zu Folien oder bis zu 4 mm dicken Platten durch Aufspritzen auf eine sich bewegende Unterlage und nachherigem Trocknen bei ca. 100° C hergestellt werden. Durch dieses bekannte Verfahren können zwar sehr gut leitfähige Schaumstoffbahnen bzw. bis 4 mm dicke Platten hergestellt werden, welche dann anschließend zu Stanzteilen weiterverarbeitet werden können; für entsprechendes Verpackungsmaterial können diese relativ dünnen Folien bzw. Platten jedoch nicht verwendet werden.

Aufgabe der Erfindung ist es, ein Verfahren zur Herstellung eines elektrisch leitfähigen PUR-Weichschaum-Kunststoffes anzugeben, welcher den oben aufgezählten Anforderungen entspricht, und aus welchem Formteile beliebiger Dimensionen gefertigt werden können.

Diese Aufgabe wird gemäß der Erfindung mit einem Verfahren mit den Verfahrensschritten nach dem Anspruch 1 gelöst.

Bei dem Verfahren nach der Erfindung werden demnach PUR-Schaumpartikel mit einem speziellen Bindemittel benetzt, dann wird ein elektrisch leitfähiges Rußpulver zugefügt und in einem Mischvorgang unter die benetzten Schaumpartikel gemischt und schließlich wird die so gewonnene Mischung mechanisch zu Blöcken oder Formteilen verpreßt. Die so erhaltenen Blöcke können zu Platten, Folien, Stanzteilen, Konfektionsteilen, Kompressionsschnitten oder Profilplatten weiterverarbeitet werden. Durch dieses erfindungsgemäße Verfahren erhält man weiche bis halbharte PUR-Schaumteile, deren spezifischer Widerstand (Oberflä-chenwiderstand und Durchgangswiderstand) in Abhängig-keit von der zugesetzten Rußpulvermenge zwischen $10^2$ und $10^8$ Ohm liegt.

Für das Herstellverfahren nach der Erfindung eignen sich Polyester- und Polyether-Schaumpartikel, aber auch Gemische von beiden können in dem gewünschten Verhältnis verarbeitet werden. Die Partikelgröße kann dabei zwischen 1 bis 20 mm liegen, wobei auch Gemische mit unterschiedlicher Partikelgröße verwendet werden können.

Vorzugsweise werden als Bindemittel Harzsysteme, PUR-Prepolymersysteme oder PUR-Klebestoffe zum Benetzen der Schaumstoffpartikel verwendet.
Dabei werden als Ruße vorzugsweise Furnaceruße mit einer Teilchengröße von ca. 20 nm und BET-Oberfläche von ca. 150 m²/g eingesetzt.

Gemäß dem Verfahren nach der Erfindung hergestellte Schaumteile haben neben der leichten Herstellbarkeit und guten Leitfähigkeit zusätzliche Vorteile. So hat der erfindungsgemäß hergestellte PUR-Schaumstoff eine gute UV-Stabilität. Wegen der erhöhten Lichtabsorption kann dieser Schaum dem direkten Sonnenlicht ausgesetzt werden, da der Rußanteil wirkungsvoll gegen photooxidativen Abbau schützt. Hierbei wird die Schaumoberfläche über einen weiten Wellenlängenbereich gegen Strahlungseinfall abgeschirmt und die Lichtenergie wird in Wärme umgewandelt; auch wird ein katalytischer Abbau durch Abfangen von Radikalen vermindert.

Die Schaumteile können auch sehr leicht eingefärbt werden. Bereits durch die Zugabe von einem Gewichtsprozent Rußpulver in ein farbiges Gemisch von PUR-Schaumpartikel wird eine tiefschwarze Färbung des Schaumstoffs erreicht. Entsprechende Grautönungen können durch eine entsprechend geringere Zugabe erzielt werden.

Die Herstellung des leitfähigen PUR-Schaumstoffes nach der Erfindung erfordert nur relativ niedrige Investitionen, selbst bei der großtechnischen Herstellung, bei gleichzeitigem kostengünstigen Rohstoffeinsatz.

Der durch das erfindungsgemäße Verfahren hergestellte leitfähige PUR-Schaumstoff kann in sehr unterschiedlichen Gebieten beste Verwendung finden, so im Verpackungsbereich, für die Lagerung, den innerbetrieblichen Transport und für Versandverpackungen von ladungsgefährdeten Bauelementen, Leiterplatten, die mit MOS- oder CMOS-Bausteinen bestückt sind, integrierten Schaltkreisen und -Bauteilen, wozu beliebig geformte Schaumstoff-Formteile hergestellt werden können. Es können EDV-Anlagen und elektrische Meßgeräte mit diesem erfindungsgemäßen leitfähigen Schaumstoff ausgekleidet werden, aber auch Transportbehälter in der Sprengstoff- und weiterverarbeitenden Industrie.

In der Elektro-, Photo- und Druckindustrie sind die erfindungsgemäßen PUR-Schaumstoffe sehr vorteilhaft für die Ausrüstung von Tischen zum langsamen Potentialausgleich über geerdete Massebänder zu verwenden.

0026920

Aus dem erfindungsgemäßen Schaumstoff können Spezialteppiche für die EDV- und MOS-verarbeitende Industrie hergestellt werden sowie Teppichunterlagen für den Wohnbereich, um ein statisches Sichaufladen, z.B. der Teppichböden zu verhindern.

Es können Mikrowellen-Laboratorien und reflektionsarme Antennenmeßräume zur Absorption von elektromagnetischen Wellen im dm- und cm-Bereich mit dem erfindungsgemäßen Schaumstoff ausgekleidet werden. Auch die Herstellung von Versandboxen und mit Wellpappe kaschierten Noppenprofilplatten ist im Rahmen der Erfindung möglich.

Patentansprüche

1. Verfahren zur Herstellung von elektrisch leitfähigem Polyurethan-Weichschaum-Kunststoff unter
Verwendung von elektrisch leitfähigem Ruß, gekennzeichnet durch folgende Verfahrensschritte:

   - Benetzen von PUR-Schaumpartikeln mit einem
     Bindemittel,
   - Zufügen von elektrisch leitfähigem Rußpulver,
   - Mischen der benetzten PUR-Schaumpartikel mit
     dem Pulver,
   - Verpressen der so gewonnenen Mischung zu
     Blöcken oder Formteilen.

2. Verfahren nach Anspruch 1, dadurch gekennzeichnet,
   daß als Schaumpartikel Polyester-Schaumpartikel
   verwendet werden.

3. Verfahren nach Anspruch 1, dadurch gekennzeichnet,
   daß als Schaumpartikel Polyether-Schaumpartikel
   verwendet werden.

4. Verfahren nach Anspruch 1, gekennzeichnet durch
   die Verwendung eines Gemisches von Polyether-
   und Polyester-Schaumpartikel.

5. Verfahren nach einem der vorhergehenden Ansprüche, gekennzeichnet durch die Verwendung von
   Schaumpartikel mit einer Partikelgröße von 1 mm
   bis 20 mm.

6. Verfahren nach einem der Ansprüche 1 bis 5, gekennzeichnet durch die Verwendung eines Harzsystems als Bindemittel.

0026920

7. Verfahren nach einem der Ansprüche 1 bis 5, gekennzeichnet durch die Verwendung eines Polyurethan-Prepolymer-Systems als Bindemittel.

8. Verfahren nach einem der Ansprüche 1 bis 5, gekennzeichnet durch die Verwendung eines Polyurethan-Klebstoffes.

9. Verfahren nach einem der Ansprüche 1 bis 8, gekennzeichnet durch die Verwendung eines Furnaceruß als elektrisch leitfähiges Rußpulver.

10. Verfahren nach Anspruch 9, dadurch gekennzeichnet, daß der Furnaceruß eine Teilchengröße von ca. 20 nm und eine BET-Oberfläche von ca. 150 m²/g aufweist.

11. Elektrisch leitfähige Kunststoffmasse, hergestellt nach dem Verfahren gemäß eines der Ansprüche 1 bis 10.